# EUROPEAN PATENT APPLICATION

(11) **EP 1 557 310 A1**
(43) Date of publication of application: **27.07.2005**
(21) Application number: 04100201.5
(22) Date of filing: 22.01.2004
(51) Int. Cl.: B60J 7/185

(54) **Folding roof for a vehicle**

(71) Applicant: Inalfa Roof Systems Group B.V., 5804 AH Venray (NL)
(72) Inventor: Nellen, Marcel, Johan, Christiaan, 5803 CT, VENRAY (NL)
(74) Representative: Voncken, Bartholomeus Maria Christiaan

(57) **Abstract**

There is provided a folding roof for a vehicle, comprising a flexible cover (5) for selectively closing or opening a roof (4) provided in a stationary roof part of the vehicle, wherein a control beam (6) is attached to the opening side of said cover, which at its lateral ends is guided in stationary guide rails (8), that extend in the longitudinal direction of the vehicle along either side of said roof opening, further comprising drive means (9) connected to said control beam for moving it in the guide rails for opening and closing the roof opening, and a transmission mechanism (11) positioned between the drive means (9) and the control beam (6) for moving the control beam towards the closed position with increased driving force during the last part of the closing movement, wherein the transmission mechanism (11) is of the type comprising a triangular construction (23,25,26) with a variable base, with a first leg (22) pivotally (23) connected to a drive slide (12) and a second leg (24) pivotally and movably connected to said drive slide (12) under the control of a locking and releasing mechanism (15,16,19,20). The locking and releasing mechanism cooperates with a fixed (31), basically non-removable part of the vehicle, such as for example a front beam of the roof opening.

## Description

The present invention relates to a folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement, wherein the transmission mechanism is of the type comprising a triangular construction with a variable base, with a first leg pivotally connected to a drive slide and a second leg pivotally and movably connected to said drive slide under the control of a locking and releasing mechanism.

Such a folding roof is known from European patent 1051307.

A folding roof of such a type experiences a large range of tolerances while closing, such that the closed positions (as defined by the locking and releasing mechanism) will differ among different folding roofs. A differing closed position means, that it is not sure whether the required position of the folding roof (generally, the control beam thereof) relative to the remainder of the vehicle (for example a front beam of the roof opening), with a play as little as possible, is realised. This effect is further negatively influenced when such a folding roof is provided for a vehicle of the cabriolet-type with removable guide rails. The removable guide rails will add to the uncertainty of the position of the folding roof in its closed position (and thus will make an effective functioning of the folding roof uncertain) due to the tolerances at the interface between the guide rails and the remainder of the vehicle.

It is an object of the present invention to further improve such a folding roof.

Thus, in accordance with the present invention, there is provided a folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement, wherein the transmission mechanism is of the type comprising a triangular construction with a variable base, with a first leg pivotally connected to a drive slide and a second leg pivotally and movably connected to said drive slide under the control of a locking and releasing mechanism, characterized in that the locking and releasing mechanism cooperates with a fixed, basically non-removable part of the vehicle.

As a result the position of the folding roof in its closed position always will be defined relative to said fixed part of the vehicle such that in such a situation any play between the folding roof and the remainder of the vehicle (especially between the control beam of the flexible cover and the stationary roof part) can be minimised. As a result the construction of the folding roof can be made safer, simpler with less moving parts and more reliable.

It is noted that the phrase 'basically non-removable' intends to express that said part is not removable during normal use. Of course it could be possible that such a part is removable for servicing and repairs.

In accordance with a preferred embodiment of the folding roof in accordance with the present invention said fixed part of the vehicle is a front beam of the roof opening. Such a front beam, as is known per se, defines the forward boundary of the roof opening and is part of the stationary roof part of the vehicle. Because it generally also will be the part with which the folding roof (contol beam) cooperates in its closed position, the closing accuracy in this closed position will be extremely high.

In still a further embodiment of the folding roof in accordance with the present invention the locking and releasing mechanism comprises an arm pivotally connected to said driving slide, which arm is provided with a projecting cam for cooperation with said fixed part.

As mentioned before, the folding roof according to the present invention may be of a type, wherein the stationary guide rails are removably connected to the remainder of the vehicle. In such a case the advantages of the present invention will appear in their full extent.

Hereinafter the invention will be elucidated referring to the drawing, in which an embodiment of the folding roof according to the present invention is illustrated.
Figure 1 is a schematic plan view of an embodiment of the folding roof according to the present invention;
figure 2 shows, on a larger scale, a detail of the folding roof of figure 1 in a first position, and
figure 3 shows a detail as depicted in fig. 2, however in a different position.

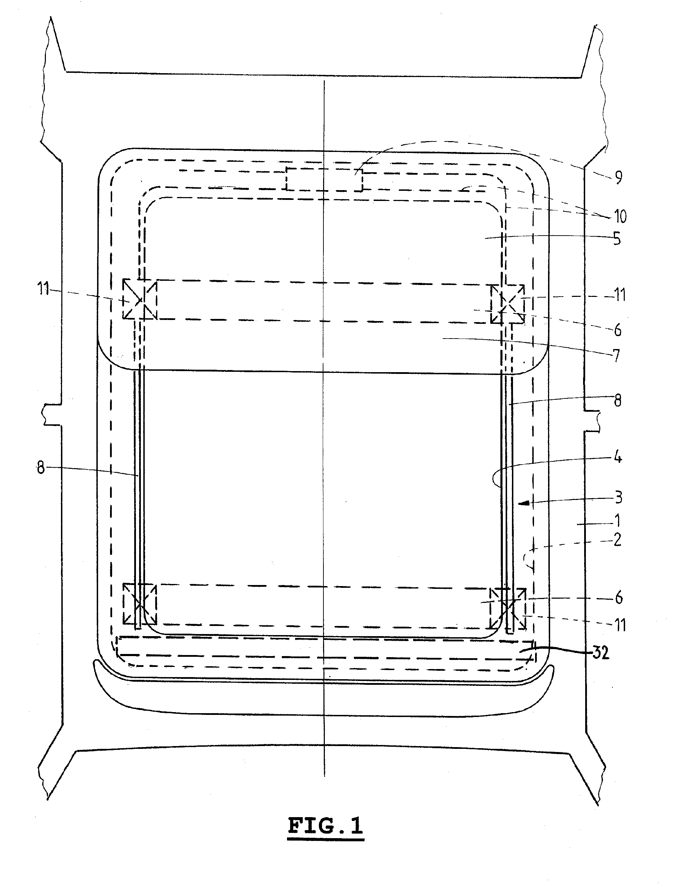

The drawing, and in first instance Fig. 1 thereof, shows a fixed roof 1 of a vehicle, in this case a passenger car, which is provided with an opening 2 for accommodating a folding roof. The folding roof comprises a frame 3, which supports parts of the folding roof and which is arranged for mounting the folding roof in the fixed roof 1. Frame 3 defines a roof opening or passage opening 4, which can be selectively closed or at least partially opened by flexible cover 5. The construction of the flexible cover 5 and the means for folding up same when the roof is being opened basically belongs to the prior art and will not be explained in more detail herein.

In the present case, a control beam 6 for operating the folding roof is provided on the front side of the flexible cover 5, on which control beam a cover plate 7 is mounted, which is connected to flexible cover 5.

Control beam 6 is guided in guide rails 8 at its lateral ends, which guide rails extend along each side of passage opening 4 in the longitudinal direction of the vehicle (of course such guide rails also could be applied without a frame 3, as can be other means for guiding the control beam). Control beam 6 can be moved forward and backward by drive means comprising a driving element 9 in the form of a crank, an electric motor or the like, and connecting means 10 in the form of pressure-resistant driving cables or the like. Cables 10 drive control beam 6 directly during the larger part of the opening and closing movement. However, in order to be able to pull the flexible cover taut nicely in the closed position of the folding roof, a transmission mechanism 11 is provided between cables 10 and control beam 6, which transmission mechanism functions to pull control beam 6 with increased force to the closed and sealed position during the last part of the closing movement.

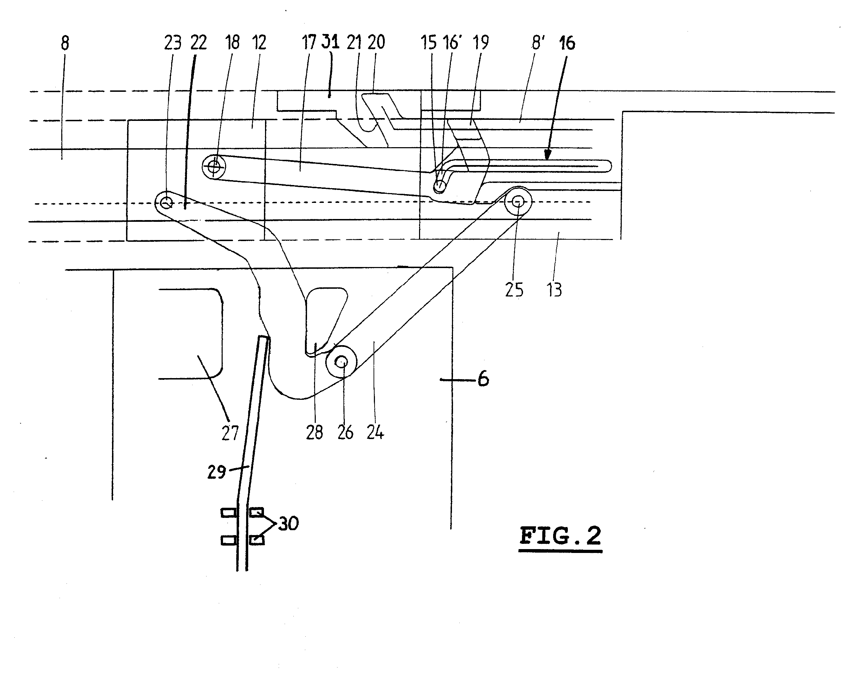

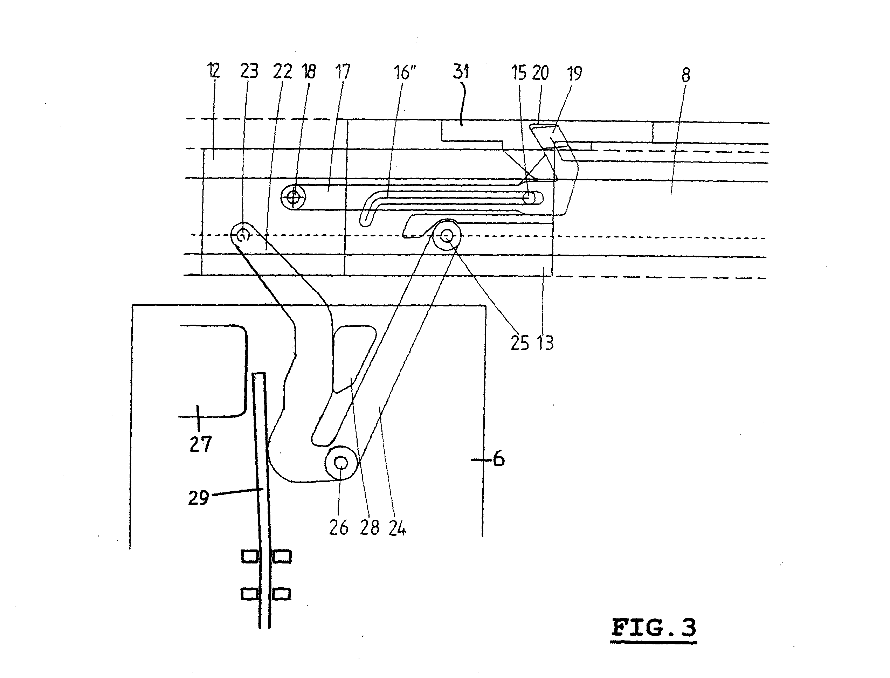

Figs. 2 and 3 show a possible embodiment of said transmission mechanism 11 and the parts that co-operate therewith. A lateral end portion of control beam 6 can be distinguished, which is supported, in a manner yet to be shown, in a driving slide 12 which is capable of reciprocating movement in guide rail 8 on the respective side of passage opening 4. A subslide 13 attached to the cables 10 cooperates with said driving slide 12. Driving slide 12 and subslide 13 are interconnected in such a manner that they move as a unit during the larger part of the closing (and opening) movement (Fig. 2), whilst driving slide 12 is locked with respect to guide rail 8 and subslide 13 moves with respect to driving slide 12 during the final part of the closing movement (Fig. 3) (and the first part of the opening movement), whereby subslide 13 drives the control beam 6 via transmission mechanism 11 during said movement relative to each other.

A locking element in the form of a pin 15 which engages in an oblique slot portion 16' of a slot 16 in subslide 13 is provided for the purpose of interconnecting slides 12 and 13 as a unit. Pin 15 is provided near the free ends of an arm 17 which is pivotally connected to driving slide 12 by means of a vertical pivot 18. While driving slide 12 and subslide 13 are fixedly interconnected, pin 15 is positioned at the end of the oblique slot portion 16'. Arm 17 is prevented from pivoting about pivot 18 by a cam or nose 19 provided on the free end of arm 17, which abuts against a flange 8' of guide rail 8 or any other appropiate fixed part of the vehicle. Thus, driving slide 12 and subslide 13 are rigidly interconnected in longitudinal direction in the position of fig. 2.

The locking engagement by locking element 15 can be released by means of the cam 19 that is present on the free end of arm 17, which cam 19 can enter into a cavity 20 formed in a fixed part 31 of the vehicle. Cam 19 is forced into cavity 20 by a catch element 21 projecting into the path of cam 19, which catches cam 19 and, because of its sloping position, guides said cam into cavity 20. Another effect of said sloping position is that the driving slide 12 which is connected to arm 17 is gradually stopped, because the cam 19 present on arm 17 continues to move forward slightly, and driving slide 12 will not come to a standstill until cam 19 fully engages in cavity 20, therefore. In this manner, the driving slide is prevented from slamming to a standstill.

The fixed part 31 of the vehicle may be a front beam of the passage opening 4. In the drawing the position of said fixed part 31 only has been indicated schematically, and it is noted that when said fixed part indeed is a front beam (as indicated schematically by reference 32 in fig. 1) it generally will be positioned in front of the position of the control beam 6 when the folding roof is closed (as seen in the longitudinal direction of the vehicle) and that the arm 17 then will have a corresponding enlarged length.

The lateral movement of arm 17 caused by cam 19 engaging into cavity 20 not only locks driving slide 12 in position with respect to the fixed part 31, but also causes the locking engagement between driving slide 12 and subslide 13 to be released, since the pin 15 present on arm 17 moves from the oblique slot portion 16 into the slot portion 16' that extends in the longitudinal direction of guide rail 8, as a result of which subslide 13 can move relative to driving slide 12, due to the fact that pin 15 has moved into slot portion 16'. Arm 17 comprising cam 19 thus functions as a releasing element for locking element/pin 15, and also as a locking element for driving slide 12, and thus as a push-off element for transmission mechanism 11. That is, the engagement between cam 19 and cavity 20 makes it possible to transmit the required push-off force to fixed part 31 via cam 9, which enables the transmission mechanism to produce a speed-reducing and thus force-increasing effect.

The illustrated transmission mechanism 11 comprises a triangular construction with a first leg 22, which is pivotally connected to driving slide 12 by means of a vertical pivot 23, and a second leg 24, which is pivotally connected to subslide 13 by means of a vertical pivot 25. Legs 22 and 24 are pivoted together by means of a pivot 26 at their ends remote from pivots 23, 25. In this manner, a triangular construction having a variable base is formed, because vertical pivot 25 on subslide 13 is capable of movement with respect to pivot 23 on driving slide 12. Movement of subslide 13 with respect to driving slide 12 thus causes the triangle to change its form, to the effect that the angle between legs 22 and 24 will be changed and the top of the triangle will shift relative to the angular point formed by pivot 23.

The triangular construction of the transmission mechanism 11 is in driving engagement with control beam 6 in that first leg 22 is accommodated between upright walls 27 and 28 on control beam 6. In the specific embodiment illustrated here the first leg 22 is positioned at some distance from upright wall 27 while engaging a spring means 29. The spring means 29, in the shown embodiment a leaf spring, is attached to the control beam 6 by mountings 30. It is conceivable, however, that the first leg will directly engage the upright wall 27 without the interpositioning of said spring means 29. For the present invention, however, this is not an essential feature.

In the position shown in fig. 2, which occurs among others during the first part of closing the folding roof, the slides 12 and 13 are united and the triangular construction is in its initial position. Its leg 22 engages the spring means 29 (or the upright wall 27 if a spring means is not provided).

During the last part of the closing movement of the control beam 6 and flexible cover 5 (figure 3) driving slide 12 has been stopped because the arm 7 carried thereby has engaged the cavity 20 of the fixed part 31 with its cam 19. The subslide 13 has been moved further, as a result of which the triangular construction has assumed the position in fig. 3, while generating an increased force on the spring means 29 (or, again, upright wall 27).

The engagement of the cam 19 of arm 17 with the cavity 20 of the fixed part 31 of the vehicle ensures that the folding roof, especially its control beam 6, will always assume a well-defined position when the folding roof is closed, also in cases where the guide rails 8 can be removed (for example when the vehicle is of the cabriolet-type). Thus tolerances and play can be minimised.

The invention is not limited to the embodiment described before which can be varied widely within the scope of the invention as defined by the appending claims.

## Claims

1. Folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement, wherein the transmission mechanism is of the type comprising a triangular construction with a variable base, with a first leg pivotally connected to a drive slide and a second leg pivotally and movably connected to said drive slide under the control of a locking and releasing mechanism, **characterized in that** the locking and releasing mechanism cooperates with a fixed, basically non-removable part of the vehicle.

2. Folding roof according to claim 1, wherein said fixed part of the vehicle is a front beam of the roof opening.

3. Folding roof according to claim 1 or 2, wherein the locking and releasing mechanism comprises an arm pivotally connected to said driving slide, which arm is provided with a projecting cam for cooperation with said fixed part.

4. Folding roof according to any of the previous claims, wherein the stationary guide rails are removably connected to the remainder of the vehicle.
